# EUROPEAN PATENT APPLICATION

(11) **EP 4 397 711 A1**
(43) Date of publication of application: **10.07.2024**
(21) Application number: 22865011.5
(22) Date of filing: 30.08.2022
(51) Int. Cl.: C08L 67/04, C08K 11/00

(54) **MOLDED ARTICLE COMPRISING PULP AND BIODEGRADABLE RESIN, METHOD FOR MANUFACTURING SAME, AND COMPOSITION FOR MOLDING**

(30) Priority: 31.08.2021 KR 20210115992
(71) Applicant: CJ CheilJedang Corporation, Seoul 04560 (KR)
(72) Inventor: HEO, Min Haeng, Seoul 04560 (KR); PARK, Jeung Yil, Seoul 04560 (KR); MOON, Sang Gwon, Seoul 04560 (KR); JANG, Robin, Seoul 04560 (KR); YOON, Ki Chull, Seoul 04560 (KR)
(74) Representative: Dehns
(86) International application number: PCT/KR2022/012941
(87) International publication number: WO 2023/033509

(57) **Abstract**

A molded article according to the present invention has improved water resistance and tear index and is biodegradable even in the sea, through the introduction of a polyhydroxyalkanoate (PHA) resin, which is a biodegradable polymer, into pulp. The molded article according to the present invention can be manufactured from a mixed composition of pulp and a biodegradable resin by a process such as hot pressing using a mold, and thus can be provided for various applications and in various forms, in various fields.

## Description

### Technical Field

The present invention relates to a molded article comprising pulp and a biodegradable resin, to a process for preparing the same, and to a composition for molding.

### Background Art

Petroleum-based general-purpose plastics such as polypropylene (PP), polyethylene (PE), polystyrene (PS), and polyvinyl chloride (PVC) are not decomposed in nature, causing environmental pollution. In contrast, biodegradable plastics are environmentally friendly since they can be decomposed into water and carbon dioxide by microorganisms existing in nature.

Conventional molded pulp products are made of cellulose, an environmentally friendly polymer, and are used in a variety of applications. However, if they are made of pulp only, they are very poor in water resistance, salt resistance, folding endurance, and tear resistance.

To overcome these shortcomings of conventional molded pulp products, molded pulp products are being developed by adding a plastic with excellent water resistance and strength. However, when petroleum-based plastics are added, there is a problem in that they are not biodegraded well. When polylactic acid, which is well-known as a biodegradable plastic, is added, it lacks water resistance and tear resistance and is not biodegraded well in the ocean.

Meanwhile, polyhydroxyalkanoate (PHA), which is biodegradable even in the ocean, among biodegradable plastics is an environmentally friendly polymer that can be a solution to the current situation where the marine waste problem is becoming increasingly serious.

### [Prior Art Document]

(Patent Document 1) Korean Laid-open Patent Publication No. 2003-0012482

### Disclosure of Invention

### Technical Problem

As a result of research conducted by the present inventors, when a polyhydroxyalkanoate (PHA) resin, a biodegradable polymer, is added to conventional molded pulp products, it is possible to achieve molded articles that have enhanced water resistance and tear resistance and are biodegradable even in the ocean.

Accordingly, an object of the present invention is to provide a molded article that comprises pulp and is excellent in biodegradability, water resistance, and tear resistance, a process for preparing the same, and a composition for the same.

### Solution to Problem

The present invention provides a molded article that comprises pulp and a biodegradable resin, wherein the biodegradable resin comprises a polyhydroxyalkanoate (PHA) resin.

According to an embodiment, the molded article has a brine absorption rate of 100 g/m² or less for 30 minutes in a Cobb test according to the TAPPI T441 standard.

In addition, the present invention provides a process for preparing a molded article that comprises preparing a mixed composition comprising pulp and a biodegradable resin; and preparing a molded article from the mixed composition using a mold, wherein the biodegradable resin comprises a polyhydroxyalkanoate (PHA) resin.

In addition, the present invention provides a composition that comprises pulp and a biodegradable resin, wherein the biodegradable resin comprises a polyhydroxyalkanoate (PHA) resin, and when moisture is removed from the composition, which is then dried by pressing at a temperature of 170°C for 2 minutes with a hot press, the brine absorption rate is 100 g/m² or less for 30 minutes in a Cobb test according to the TAPPI T441 standard.

### Advantageous Effects of Invention

As a polyhydroxyalkanoate (PHA) resin, a biodegradable polymer, is added to pulp in the molded article according to the present invention, water resistance and tear resistance are enhanced, and it is biodegradable even in the ocean. In addition, as the crystallinity of the polyhydroxyalkanoate (PHA) resin is adjusted, additional effects such as enhanced water resistance or folding endurance of the molded article can be obtained.

Since the molded article according to the present invention can be prepared from a mixed composition of pulp and a biodegradable resin by a process such as hot pressing using a mold, it can be provided in various applications and forms in various fields.

### Brief Description of Drawings

Fig. 1 shows a process of preparing a molded article according to an embodiment of the present invention.
Fig. 2 shows a process of preparing a molded article according to another embodiment of the present invention.

### [Explanation of Reference Numerals]

10: molded article, 11: preliminarily molded article, 21: upper mold, 22: lower mold, 30: tank, 40: conveyor, 50: drying furnace.

### Best Mode for Carrying out the Invention

Hereinafter, various embodiments and examples of the present invention will be described in detail by referring to the drawings.

In the description of the present invention, if it is determined that a detailed description of a relevant known constitution or function may obscure the subject matter of the present invention, the detailed description thereof will be omitted. In addition, the sizes of individual elements in the drawings may be exaggeratedly depicted or omitted for the sake of description, and they may differ from the actual sizes.

In the present specification, when one component is described to be formed on/under another component or connected or coupled to each other, it covers the cases where these components are directly or indirectly formed, connected, or coupled through another component. In addition, it should be understood that the criterion for the terms on and under of each component may vary depending on the direction in which the object is observed.

In this specification, terms referring to the respective components are used to distinguish them from each other and are not intended to limit the scope of the present invention. In addition, in the present specification, a singular expression is interpreted to cover a plural number as well unless otherwise specified in the context.

In the present specification, the term "comprising" is intended to specify a particular characteristic, region, step, process, element, and/or component. It does not exclude the presence or addition of any other characteristic, region, step, process, element and/or component, unless specifically stated to the contrary.

In the present specification, the terms first, second, and the like are used to describe various components. But the components should not be limited by the terms. The terms are used for the purpose of distinguishing one element from another.

### Molded article

The molded article according to an embodiment of the present invention comprises pulp and a biodegradable resin, wherein the biodegradable resin comprises a polyhydroxyalkanoate (PHA) resin.

The molded article according to an embodiment may comprise the biodegradable resin in an amount of, for example, 1 part by weight to 80 parts by weight relative to 100 parts by weight of the pulp. Specifically, the molded article may comprise the biodegradable resin in an amount of 1 part by weight or more, 5 parts by weight or more, 10 parts by weight or more, 15 parts by weight or more, 20 parts by weight or more, 30 parts by weight or more, or 40 parts by weight or more, and 80 parts by weight or less, 75 parts by weight or less, 70 parts by weight or less, 65 parts by weight or less, 60 parts by weight or less, or 50 parts by weight or less, relative to 100 parts by weight of the pulp.

As is well known, the pulp may be an aggregate of cellulose fibers obtained from wood or other fiber plants by mechanical, chemical, or intermediate methods. Pulp may be in the state of porridge containing a lot of moisture, or it may be a wet substance dehydrated by a method such as pressing. As a specific example, it may be an extract of the fibers that constitute a plant. For example, pulp may be obtained from long hair fibers such as cotton, stems of legume plants such as bamboo, straw, esparto, and bagasse, stems of Manila hemp, bark of trees such as hemp, flax, mulberry, hemp, and anthus, and stems of trees excluding branches or leaves. Pulp can be classified into wood pulp and non-wood pulp according to raw materials. The wood pulp may include softwood pulp and hardwood pulp. The non-wood pulp may include straw pulp, bagasse pulp, reed pulp, bamboo pulp, bast fiber pulp, rag pulp, cotton pulp, and the like.

The molded article according to an embodiment comprises a polyhydroxyalkanoate (PHA) resin as a biodegradable resin. For example, it may comprise 80% by weight or more, 85% by weight or more, 90% by weight or more, or 95% by weight or more of a PHA resin as a biodegradable resin. As a specific example, the molded article may comprise 100% by weight of a polyhydroxyalkanoate (PHA) resin as a biodegradable resin.

The polyhydroxyalkanoate (PHA) resin may have physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibits complete biodegradability, and is excellent in biocompatibility.

Specifically, the PHA resin is a natural polyester polymer that accumulates in microbial cells. Since it is a biodegradable material, it can be composted and finally decomposed into carbon dioxide, water, and organic waste without generating toxic waste. In particular, the PHA resin is biodegradable in soil and ocean. Thus, when the biodegradable resin comprises the PHA resin, it is biodegradable under any environmental conditions, such as soil and ocean, and has environmentally friendly characteristics. Thus, an article formed using the biodegradable resin comprising the PHA resin can be used in various fields as an environmentally friendly article.

The PHA resin may be formed by enzyme-catalyzed polymerization of one or more monomer repeat units in living cells.

The PHA resin may be a PHA copolymer resin. Specifically, it may be a copolymer comprising two or more different repeat units in which the different repeat units are randomly distributed in the polymer chain.

Examples of repeat units that may be contained in the PHA resin include 2-hydroxybutyrate, lactic acid, glycolic acid, 3-hydroxybutyrate (3-HB), 3-hydroxypropionate (3-HP), 3-hydroxyvalerate (3-HV), 3-hydroxyhexanoate (3-HH), 3-hydroxyheptanoate (3-HHep), 3-hydroxyoctanoate (3-HO), 3-hydroxynonanoate (3-HN), 3-hydroxydecanoate (3-HD), 3-hydroxydodecanoate (3-HDd), 4-hydroxybutyrate (4-HB), 4-hydroxyvalerate (4-HV), 5-hydroxyvalerate (5-HV), and 6-hydroxyhexanoate (6-HH). The PHA resin may comprise one or more repeat units selected from the above.

Specifically, the PHA resin may comprise one or more repeat units selected from the group consisting of 3-HB, 4-HB, 3-HP, 3-HH, 3-HV, 4-HV, 5-HV, and 6-HH.

More specifically, the PHA resin may comprise a 4-HB repeat unit. That is, the PHA resin may be a PHA copolymer comprising a 4-HB repeat unit.

In addition, the PHA resin may comprise isomers. For example, the PHA resin may comprise structural isomers, enantiomers, or geometric isomers. Specifically, the PHA resin may comprise structural isomers.

In addition, the PHA resin may be a PHA copolymer that comprises a 4-HB repeat unit and further comprises one repeat unit different from the 4-HB repeat unit, or further comprises two, three, four, five, six, or more repeat units different from each other.

According to an embodiment of the present invention, the PHA resin may be a PHA copolymer resin that further comprises one or more repeat units selected from the group consisting of 3-HB, 3-HP, 3-HH, 3-HV, 4-HV, 5-HV, and 6-HH, while comprising a 4-hydroxybutyrate (4-HB) repeat unit.

More specifically, the PHA resin may be a PHA copolymer resin comprising a 3-HB repeat unit and a 4-HB repeat unit. For example, the PHA resin may be poly-3-hydroxybutyrate-co-4-hydroxybutyrate (3HB-co-4HB).

According to an embodiment of the present invention, it is important to adjust the content of the 4-HB repeat unit in the PHA copolymer.

That is, in order to achieve the physical properties desired in the present invention, in particular, to increase the biodegradability in soil and ocean and to achieve excellent physical properties such as enhanced optical properties, thermal properties, and mechanical properties, the content of the 4-HB repeat unit in the PHA copolymer may be important.

More specifically, the PHA copolymer resin may comprise a 4-HB repeat unit in an amount of 0.1% by weight to 60% by weight based on the total weight of the PHA copolymer resin. For example, the content of the 4-HB repeat unit may be 0.1% by weight to 55% by weight, 0.5% by weight to 60% by weight, 0.5% by weight to 55% by weight, 1% by weight to 60% by weight, 1% by weight to 55% by weight, 1% by weight to 50% by weight, 2% by weight to 55% by weight, 3% by weight to 55% by weight, 3% by weight to 50% by weight, 5% by weight to 55% by weight, 5% by weight to 50% by weight, 10% by weight to 55% by weight, 10% by weight to 50% by weight, 1% by weight to 40% by weight, 1% by weight to 30% by weight, 1% by weight to 29% by weight, 1% by weight to 25% by weight, 1% by weight to 24% by weight, 2% by weight to 20% by weight, 2% by weight to 23% by weight, 3% by weight to 20% by weight, 3% by weight to 15% by weight, 4% by weight to 18% by weight, 5% by weight to 15% by weight, 8% by weight to 12% by weight, 9% by weight to 12% by weight, 15% by weight to 55% by weight, 15% by weight to 50% by weight, 20% by weight to 55% by weight, 20% by weight to 50% by weight, 25% by weight to 55% by weight, 25% by weight to 50% by weight, 35% by weight to 60% by weight, 40% by weight to 55% by weight, or 45% by weight to 55% by weight, based on the total weight of the PHA copolymer resin.

Alternatively, the PHA copolymer resin may comprise a 4-HB repeat unit in an amount of 0.1% by weight or more, 1% by weight or more, 5% by weight or more, 10% by weight or more, 15% by weight or more, 20% by weight or more, 25% by weight or more, 30% by weight or more, 35% by weight or more, 40% by weight or more, or 45% by weight or more, and 60% by weight or less, 55% by weight or less, 50% by weight or less, 45% by weight or less, or 40% by weight or less, based on the total weight of the PHA copolymer resin, but it is not limited thereto. As a specific example, the PHA resin may be a PHA copolymer resin comprising a 4-HB repeat unit in an amount of 0.1% by weight to 60% by weight.

If the content of the 4-HB repeat unit satisfies the above range, the biodegradability in soil and ocean may be increased, excellent optical properties are maintained, the thermal properties of a material may be improved, and mechanical properties such as flexibility and strength may be further enhanced.

In addition, the PHA resin comprises at least one or more of a 4-HB repeat unit, and the content of the 4-HB repeat unit may be controlled to adjust the crystallinity of the PHA resin. That is, the PHA resin may be a PHA copolymer with controlled crystallinity.

The PHA resin whose crystallinity is adjusted may be one in which its crystallinity and amorphousness are adjusted as the irregularities are increased in its molecular structure. Specifically, the types and ratios of the monomers or the types and/or contents of the isomers may be adjusted.

The PHA resin may comprise a combination of two or more PHA resins having different crystallinities. That is, the PHA resin may be adjusted to have the content of a 4-HB repeat unit in the specific range by mixing two or more types of PHA resins having different crystallinities.

For example, the PHA resin comprises a mixed resin of a first PHA resin and a second PHA resin having different contents of a 4-HB repeat unit, and the PHA resin may be adjusted such that the content of a 4-HB repeat unit is 0.1% by weight to 60% by weight based on the total weight of the PHA resin. Specific characteristics of the first PHA resin and the second PHA resin are described below.

Meanwhile, the PHA copolymer resin may comprise a 3-HB repeat unit in an amount of 20% by weight or more, 25% by weight or more, 30% by weight or more, 35% by weight or more, 40% by weight or more, 45% by weight or more, 50% by weight or more, 60% by weight or more, 70% by weight or more, or 75% by weight or more, and 99% by weight or less, 98% by weight or less, 97% by weight or less, 96% by weight or less, 95% by weight or less, 93% by weight or less, 91% by weight or less, 90% by weight or less, 80% by weight or less, 70% by weight or less, 60% by weight or less, or 55% by weight or less, based on the total weight of the PHA copolymer resin.

Meanwhile, the PHA resin may have a glass transition temperature (Tg) of, for example, -45°C to 80°C, -35°C to 80°C, -30°C to 80°C, -25°C to 75°C, -20°C to 70°C, -35°C to 5°C, -25°C to 5°C, -35°C to 0°C, -25°C to 0°C, -30°C to -10°C, -35°C to -15°C, -35°C to -20°C, -20°C to 0°C, -15°C to 0°C, or -15°C to -5°C.

The crystallization temperature (Tc) of the PHA resin, for example, may not be measured or may be, for example, 70°C to 120°C, 75°C to 120°C, 75°C to 115°C, 75°C to 110°C, or 90°C to 110°C.

The melting temperature (Tm) of the PHA resin, for example, may not be measured or may be, for example, 100 to 170°C, for example, 110 to 150°C, or, for example, 120 to 140°C.

The PHA resin may have a weight average molecular weight (Mw) of, for example, 10,000 g/mole to 1,200,000 g/mole. For example, the weight average molecular weight of the PHA resin may be 50,000 g/mole to 1,200,000 g/mole, 100,000 g/mole to 1,200,000 g/mole, 50,000 g/mole to 1,000,000 g/mole, 100,000 g/mole to 1,000,000 g/mole, 100,000 g/mole to 900,000 g/mole, 200,000 g/mole to 1,200,000 g/mole, 250,000 g/mole to 1,150,000 g/mole, 300,000 g/mole to 1,100,000 g/mole, 350,000 g/mole to 1,000,000 g/mole, 350,000 g/mole to 950,000 g/mole, 100,000 g/mole to 900,000 g/mole, 200,000 g/mole to 800,000 g/mole, 200,000 g/mole to 700,000 g/mole, 250,000 g/mole to 650,000 g/mole, 200,000 g/mole to 400,000 g/mole, 300,000 g/mole to 800,000 g/mole, 300,000 g/mole to 600,000 g/mole, 400,000 g/mole to 800,000 g/mole, 500,000 g/mole to 1,200,000 g/mole, 500,000 g/mole to 1,000,000 g/mole 550,000 g/mole to 1,050,000 g/mole, 550,000 g/mole to 900,000 g/mole, or 600,000 g/mole to 900,000 g/mole.

The PHA resin may comprise a first PHA resin, a second PHA resin, or a mixed resin of the first PHA resin and the second PHA resin.

The first PHA resin and the second PHA resin may be distinguished in terms of the content of a 4-HB repeat unit, glass transition temperature (Tg), crystallization temperature (Tg), and melting temperature (Tm).

Specifically, the first PHA may comprise a 4-HB repeat unit in an amount of, for example, 15% by weight to 60% by weight, 15% by weight to 55% by weight, 20% by weight to 55% by weight, 25% by weight to 55% by weight, 30% by weight to 55% by weight, 35% by weight to 55% by weight, 20% by weight to 50% by weight, 25% by weight to 50% by weight, 30% by weight to 50% by weight, 35% by weight to 50% by weight, or 20% by weight to 40% by weight.

The glass transition temperature (Tg) of the first PHA resin may be, for example, -45°C to -10°C, -35°C to -10°C, -35°C to -15°C, -35°C to -20°C, or -30°C to -20°C.

The crystallization temperature (Tc) of the first PHA resin, for example, may not be measured or may be, for example, 60°C to 120°C, 60°C to 110°C, 70°C to 120°C, or 75°C to 115°C.

The melting temperature (Tm) of the first PHA resin, for example, may not be measured or may be, for example, 100°C to 170°C, 100°C to 160°C, 110°C to 160°C, or 120°C to 150°C.

The first PHA resin may have a weight average molecular weight (Mw) of, for example, 10,000 g/mole to 1,200,000 g/mole, 10,000 g/mole to 1,000,000 g/mole, 50,000 g/mole to 1,000,000 g/mole, 200,000 g/mole to 1,200,000 g/mole, 300,000 g/mole to 1,000,000 g/mole, 100,000 g/mole to 900,000 g/mole, 500,000 g/mole to 900,000 g/mole, 200,000 g/mole to 800,000 g/mole, or 200,000 g/mole to 400,000 g/mole.

Meanwhile, the second PHA resin may comprise a 4-HB repeat unit in an amount of 0.1% by weight to 30% by weight. For example, the second PHA resin may comprise a 4-HB repeat unit in an amount of, for example, 0.1% by weight to 30% by weight, 0.5% by weight to 30% by weight, 1% by weight to 30% by weight, 3% by weight to 30% by weight, 1% by weight to 28% by weight, 1% by weight to 25% by weight, 1% by weight to 24% by weight, 1% by weight to 20% by weight, 1% by weight to 15% by weight, 2% by weight to 25% by weight, 3% by weight to 25% by weight, 3% by weight to 24% by weight, 5% by weight to 24% by weight, 5% by weight to 20% by weight, greater than 5% by weight to less than 20% by weight, 7% by weight to 20% by weight, 10% by weight to 20% by weight, 15% by weight to 25% by weight, or 15% by weight to 24% by weight.

The first PHA resin and the second PHA resin may be different from each other in terms of the content of a 4-HB repeat unit.

The glass transition temperature (Tg) of the second PHA resin may be, for example, -30°C to 80°C, for example, -30°C to 10°C, for example, -25°C to 5°C, for example, -25°C to 0°C, for example, -20°C to 0°C, or, for example, -15°C to 0°C.

The glass transition temperature (Tg) of the first PHA resin and the glass transition temperature (Tg) of the second PHA resin may be different from each other.

The second PHA resin may have a crystallization temperature (Tc) of, for example, 70 to 120°C, for example, 75 to 115°C, or, for example, may not be measured.

The second PHA resin may have a melting temperature (Tm) of, for example, 100°C to 170°C, for example, 105°C to 165°C, for example, 110°C to 160°C, for example, 100°C to 150°C, for example, 115°C to 155°C, or, for example, 120°C to 150°C.

The second PHA resin may have a weight average molecular weight (Mw) of 10,000 g/mole to 1,200,000 g/mole, 50,000 g/mole to 1,100,000 g/mole, 100,000 g/mole to 1,000,000 g/mole, 300,000 g/mole to 1,000,000 g/mole, 100,000 g/mole to 900,000 g/mole, 200,000 g/mole to 800,000 g/mole, 200,000 g/mole to 600,000 g/mole, 200,000 g/mole to 400,000 g/mole, or 400,000 g/mole to 700,000 g/mole.

Specifically, the first PHA resin has a glass transition temperature (Tg) of -35°C to -15°C, the second PHA resin satisfies at least one characteristic selected from a glass transition temperature (Tg) of -15°C to 0°C, a crystallization temperature (Tc) of 80°C to 110°C, and a melting temperature (Tm) of 120°C to 160°C, and the glass transition temperature (Tg) of the first PHA resin and the glass transition temperature (Tg) of the second PHA resin may be different from each other. In addition, the crystallization temperature (Tc) and melting temperature (Tm) of the first PHA resin may not be measured.

If the first PHA resin and the second PHA resin each satisfy at least one of the content of a 4-HB repeat unit, glass transition temperature (Tg), crystallization temperature (Tc), and melting temperature (Tm) in the above ranges, it may be more advantageous for achieving the desired effect in the present invention.

In addition, the first PHA resin and the second PHA resin may each be a PHA resin whose crystallinity is adjusted.

For example, the first PHA resin may comprise an amorphous PHA resin (hereinafter, referred to as an aPHA resin), and the second PHA resin may comprise a semi-crystalline PHA resin (hereinafter, referred to as an scPHA resin).

The aPHA resin and the scPHA resin may be distinguished in terms of the content of a 4-HB repeat unit, glass transition temperature (Tg), crystallization temperature (Tg), melting temperature (Tm), or the like.

The aPHA resin may comprise a 4-HB repeat unit in an amount of, for example, 25 to 50% by weight based on the total weight of the PHA resin.

The aPHA resin may have a glass transition temperature (Tg) of, for example, -35 to -20°C.

The crystallization temperature (Tc) of the aPHA resin may not be measured.

The melting temperature (Tm) of the aPHA resin may not be measured.

The scPHA resin may comprise a 4-HB repeat unit in an amount of, for example, 1 to less than 25% by weight based on the total weight of the PHA resin.

The scPHA resin may have a glass transition temperature (Tg) of -20 to 0°C.

The scPHA resin may have a crystallization temperature (Tc) of 75 to 115°C.

The scPHA resin may have a melting temperature (Tm) of 110 to 160°C.

Meanwhile, in order to accomplish the effect according to an embodiment of the present invention, the content of the PHA resin contained in the biodegradable resin is important.

The biodegradable resin may comprise the PHA resin in an amount of 40 to 99% by weight based on the total weight of the biodegradable resin. For example, it may be contained in an amount of 50% by weight to 95% by weight, 40% by weight to 80% by weight, 40% by weight or more, 50% by weight or more, 55% by weight or more, 60% by weight or more, 65% by weight or more, or 70% by weight or more, and 99% by weight or less, 95% by weight or less, 90% by weight or less, 85% by weight or less, or 80% by weight or less.

Meanwhile, when the PHA resin comprises the first PHA resin, it may comprise, for example, 1% to 95% by weight. If the first PHA resin is used alone, the first PHA resin may be employed in an amount of, for example, 5 to 80% by weight based on the total weight of the biodegradable resin. Specifically, the first PHA resin may be employed in an amount of 10% by weight or more and 40% by weight or less.

As another example, if the first PHA resin is mixed with the second PHA resin to be used, the first PHA resin may be employed in an amount of, for example, 1 to 50% by weight, for example, 10 to 40% by weight, or, for example, 20 to 40% by weight, based on the total weight of the biodegradable resin composition.

When the PHA resin comprises the second PHA resin, it may comprise, for example, 1% to 95% by weight. If the second PHA resin is used alone, the second PHA resin may be employed in an amount of, for example, 50 to 95% by weight based on the total weight of the biodegradable resin. Specifically, the second PHA resin may be employed in an amount of 50% by weight or more, 55% by weight or more, 60% by weight or more, 65% by weight or more, or 70% by weight or more, and 95% by weight or less, 90% by weight or less, 85% by weight or less, or 80% by weight or less.

As another example, if the second PHA resin is mixed with the first PHA resin to be used, the second PHA resin may be employed in an amount of, for example, 20 to 80% by weight, or, for example, 30 to 70% by weight, based on the total weight of the biodegradable resin composition.

According to another embodiment of the present invention, when the PHA resin comprises a mixed resin of the first PHA resin and the second PHA resin, the weight ratio of the first PHA resin to the second PHA resin may be, for example, 1:0.05 to 5, for example, 1:0.5 to 4, or, for example, 1: 1.2 to 4.

If the content of the PHA resin, or the content of each of the first PHA resin and the second PHA resin, and their content ratio each satisfy the above ranges, optical properties, thermal properties, and mechanical properties can be further enhanced, and moldability, processability, and productivity can also be enhanced when a biodegradable article is produced.

In addition, the biodegradable resin may further comprise conventional biodegradable materials widely used in addition to the polyhydroxyalkanoate (PHA) resin. For example, the biodegradable resin may further comprise at least one selected from the group consisting of a polylactic acid (PLA) resin, a polybutylene succinate (PBS) resin, and a polybutylene adipate-co-terephthalate (PBAT) resin, in addition to the polyhydroxyalkanoate (PHA) resin. Specifically, the biodegradable resin may further comprise at least one of a polylactic acid (PLA) resin and a polybutylene succinate (PBS) resin.

As a specific example, the biodegradable resin may comprise a resin in which (a) the polyhydroxyalkanoate (PHA) resin and (b) at least one of the polylactic acid (PLA) resin and the polybutylene succinate (PBS) resin is blended at a weight ratio (a:b) of 1:0.1 to 1:2.3. More specifically, the blend weight ratio (a:b) may be in the range of 1:0.1 to 1:1.0, 1:0.1 to 1:0.7, 1:0.3 to 1:1.0, 1:0.3 to 1:0.7, 1:0.1 to 1:0.5, 1:1.0 to 1:2.3, 1:1.0 to 1:2.0, 1:1.0 to 1:1.5, 1:1.2 to 1:2.3, or 1:1.5 to 1:2.3.

In addition, the molded article according to an embodiment may further comprise other components. For example, the molded article may further comprise at least one selected from the group consisting of polyvinyl alcohol (PVA), carnauba wax, and carrageenan.

The shape of the molded article is not particularly limited. For example, it may have the shape of a box, a cup, a bottle, a bowl, a container, or a cylinder. It may be a disposable or reusable product, and its size is not particularly limited.

The molded article may have a thickness (thickness of the wall constituting the molded article) of 0.5 mm or more, 0.8 mm or more, 1 mm or more, 1.5 mm or more, or 2 mm or more, and may be 5 mm or less, 4 mm or less, 3 mm or less, or 2.5 mm or less. Specifically, the molded article may have a thickness of 0.8 mm to 3 mm.

The molded article may be composed of a single layer or multiple layers.

According to an embodiment, the molded article may comprise a first layer.

The first layer may comprise pulp and a polyhydroxyalkanoate (PHA) resin. For example, the first layer may be composed of a mixed composition of pulp and a polyhydroxyalkanoate (PHA) resin, or it may further comprise at least one selected from the group consisting of a polylactic acid (PLA) resin, a polybutylene succinate (PBS) resin, and a polybutylene adipate-co-terephthalate (PBAT) resin, in addition to the polyhydroxyalkanoate (PHA) resin.

The polyhydroxyalkanoate (PHA) resin contained in the first layer may comprise a 3-hydroxybutyrate (3-HB) repeat unit. In addition, the polyhydroxyalkanoate (PHA) resin contained in the first layer may comprise a 4-hydroxybutyrate (4-HB) repeat unit.

The polyhydroxyalkanoate (PHA) resin contained in the first layer may be a homopolymer resin or a copolymer resin. For example, the polyhydroxyalkanoate (PHA) resin contained in the first layer may be a polyhydroxyalkanoate (PHA) copolymer resin comprising a 4-hydroxybutyrate (4-HB) repeat unit. More specifically, the polyhydroxyalkanoate (PHA) resin contained in the first layer may be a polyhydroxyalkanoate (PHA) copolymer resin comprising a 3-hydroxybutyrate (3-HB) repeat unit and a 4-hydroxybutyrate (4-HB) repeat unit.

Specifically, the polyhydroxyalkanoate (PHA) copolymer resin contained in the first layer may comprise a 4-hydroxybutyrate (4-HB) repeat unit in an amount of 0.1% by weight to 60% by weight, or 10% by weight to 50% by weight, based on the total weight of the polyhydroxyalkanoate (PHA) copolymer resin. For example, the content of a 4-hydroxybutyrate (4-HB) repeat unit in the polyhydroxyalkanoate (PHA) copolymer resin may be 0.1% by weight to 55% by weight, 0.5% by weight to 60% by weight, 0.5% by weight to 55% by weight, 1% by weight to 60% by weight, 1% by weight to 55% by weight, 1% by weight to 50% by weight, 2% by weight to 55% by weight, 3% by weight to 55% by weight, 3% by weight to 50% by weight, 5% by weight to 55% by weight, 5% by weight to 50% by weight, 10% by weight to 55% by weight, 10% by weight to 50% by weight, 1% by weight to 40% by weight, 1% by weight to 30% by weight, 1% by weight to 29% by weight, 1% by weight to 25% by weight, 1% by weight to 24% by weight, 2% by weight to 20% by weight, 2% by weight to 23% by weight, 3% by weight to 20% by weight, 3% by weight to 15% by weight, 4% by weight to 18% by weight, 5% by weight to 15% by weight, 8% by weight to 12% by weight, 9% by weight to 12% by weight, 15% by weight to 55% by weight, 15% by weight to 50% by weight, 20% by weight to 55% by weight, 20% by weight to 50% by weight, 25% by weight to 55% by weight, 25% by weight to 50% by weight, 35% by weight to 60% by weight, 40% by weight to 55% by weight, or 45% by weight to 55% by weight, based on the total weight of the PHA copolymer resin. Specifically, the polyhydroxyalkanoate (PHA) copolymer resin may comprise a 4-hydroxybutyrate (4-HB) repeat unit in an amount of 25% by weight to 50% by weight based on the total weight of the polyhydroxyalkanoate (PHA) copolymer resin.

For example, the polyhydroxyalkanoate (PHA) copolymer resin contained in the first layer may comprise a 4-hydroxybutyrate (4-HB) repeat unit in an amount of 0.1% by weight or more, 1% by weight or more, 5% by weight or more, 10% by weight or more, 15% by weight or more, 20% by weight or more, 25% by weight or more, 30% by weight or more, 35% by weight or more, 40% by weight or more, or 45% by weight or more, and 60% by weight or less, 55% by weight or less, 50% by weight or less, 45% by weight or less, or 40% by weight or less, based on the total weight of the polyhydroxyalkanoate (PHA) copolymer resin, but it is not limited thereto.

The polyhydroxyalkanoate (PHA) resin contained in the first layer may comprise two or more types of a PHA resin, for example, may be a resin in which the first PHA and the second PHA resin are mixed. In addition, the first PHA resin and the second PHA resin may differ from each other in terms of crystallinity. For example, the first PHA resin may comprise an amorphous PHA resin (hereinafter, referred to as an aPHA resin), and the second PHA resin may comprise an aPHA resin or a semi-crystalline PHA resin (hereinafter, referred to as an scPHA resin).

The aPHA resin and the scPHA resin may be distinguished in terms of the content of a 4-HB repeat unit, glass transition temperature (Tg), crystallization temperature (Tg), melting temperature (Tm), or the like. Specific features are as described above.

In addition, the first layer may further comprise other additive components, for example, at least one selected from the group consisting of polyvinyl alcohol (PVA), carnauba wax, and carrageenan.

Alternatively, the molded article may comprise a first layer and a second layer. For example, the molded article may comprise a first layer comprising pulp and a second layer comprising the polyhydroxyalkanoate (PHA) resin.

As the molded article according to an embodiment is prepared from a mixture of pulp and a PHA resin, it has excellent water resistance, salt resistance, and oil resistance.

For example, the molded article has a water absorption rate of 100 g/m² or less, 90 g/m² or less, or 80 g/m² or less, for 30 minutes in a Cobb test according to the TAPPI T441 standard. Specifically, the molded article has a water absorption rate of 70 g/m² or less, 60 g/m² or less, 50 g/m² or less, 40 g/m² or less, 30 g/m² or less, 20 g/m² or less, 15 g/m² or less, or 10 g/m² or less, for 30 minutes in a Cobb test according to the TAPPI T441 standard.

According to an embodiment, the molded article has a brine absorption rate of 100 g/m² or less for 30 minutes in a Cobb test (brine is used instead of distilled water) according to the TAPPI T441 standard. Specifically, the molded article has a brine absorption rate of 90 g/m² or less, 80 g/m² or less, 70 g/m² or less, 60 g/m² or less, 50 g/m² or less, 40 g/m² or less, 30 g/m² or less, 20 g/m² or less, 15 g/m² or less, or 10 g/m² or less, for 30 minutes in a Cobb test according to the TAPPI T441 standard. Here, the brine may have a concentration of 3.5% by weight.

In addition, the molded article may have an average kit rating of 3 to 12 when tested for oil resistance according to the TAPPI UM557 standard. Specifically, the average kit rating of the molded article may be 3 or more, 4 or more, 5 or more, 6 or more, 7 or more, or 8 or more, and may be 12 or less, 11 or less, 10 or less, or 9 or less, when tested for oil resistance according to the TAPPI UM557 standard.

In addition, as the molded article according to an embodiment is prepared from a composition in which pulp and a PHA resin are mixed, it would not tear easily and has excellent folding endurance.

For example, the molded article may have a tear index of 5 mN·m²/g or more as measured according to the KS M ISO 1974 standard. Specifically, the molded article may have a tear index of 10 mN·m²/g or more, 15 mN·m²/g or more, 20 mN·m²/g or more, 25 mN·m²/g or more, 30 mN·m²/g or more, 35 mN·m²/g or more, or 40 mN·m²/g or more, and 200 mN·m²/g or less, 150 mN·m²/g or less, 120 mN·m²/g or less, 100 mN·m²/g or less, or 80 mN·m²/g or less, as measured according to the KS M ISO 1974 standard.

In addition, the molded article may have a number of repeated folding of 10 or more as measured using a folding endurance tester (MIT type). Specifically, the molded article may have a number of repeated folding of 30 or more, 50 or more, 100 or more, 200 or more, or 300 or more, as measured using a folding endurance tester. In addition, the upper limit of the number of repeated folding is not particularly limited, but it may be, for example, 200,000 or less, 100,000 or less, 50,000 or less, 10,000 or less, 5,000 or less, or 1,000 or less.

In addition, as the molded article according to an embodiment is composed of pulp and a biodegradable resin, it can be biodegraded by any one of microorganisms, moisture, oxygen, light, and heat. For example, the molded article may have a biodegradability of 90% or more in soil and ocean. The biodegradability indicates the rate of decomposition as compared with the standard material (e.g., cellulose) in the same period. The Ministry of Environment of Korea defines a biodegradable material whose biodegradability is 90% or higher as compared with the standard material. Specifically, the marine biodegradability measured according to the EL 724 standard is 90% or more.

In particular, as the molded article according to an embodiment is composed of pulp and a biodegradable resin, it may be treated as paper types when discarded upon use. In contrast, biodegradable molded articles that do not contain pulp cannot be treated as paper types when discarded upon use.

### Process for preparing a molded article

The process for preparing a molded article according to an embodiment comprises preparing a mixed composition comprising pulp and a biodegradable resin; and preparing a molded article from the mixed composition using a mold, wherein the biodegradable resin comprises a polyhydroxyalkanoate (PHA) resin.

Descriptions on the biodegradable resin and the polyhydroxyalkanoate (PHA) resin are as described above.

The mixed composition may be prepared as a suspension in which pulp and a biodegradable resin are dispersed in a solvent. The solvent may be water, distilled water, or a hydrophilic solvent. Specifically, the solvent may be water, distilled water, or a hydrophilic solvent, or a mixture of water or distilled water and a hydrophilic solvent. For example, the hydrophilic solvent may be at least one selected from the group consisting of methanol, ethanol, n-propanol, isopropanol, n-butanol, isobutanol, sec-butanol, tert-butanol, n-amyl alcohol, isoamyl alcohol, sec-amyl alcohol, tert-amyl alcohol, 1-ethyl-1-propanol, 2-methyl-1-butanol, n-hexanol, and cyclohexanol.

At least one selected from the group consisting of polyvinyl alcohol (PVA), carnauba wax, and carrageenan, in addition to pulp and a biodegradable resin, may be added to the mixed composition.

In addition, the mixed composition may comprise at least one additive selected from the group consisting of slip agents, antioxidants, crosslinking agents, nucleating agents, fillers, stabilizers, and compatibilizers. For example, the additive may be employed in an amount of 0.5 to 30% by weight based on the total solids content of the mixed composition.

The slip agent is an additive for enhancing the slip properties (slippery properties) during extrusion and for preventing extrudate surfaces from sticking to each other.

Any commonly used slip agent may be used as the slip agent as long as the effect of the present invention is not impaired. For example, the slip agent may be at least one selected from the group consisting of erucamide, oleamide, and stearamide.

The slip agent may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids content of the mixed composition.

If the content of the slip agent satisfies the above range, the processability, productivity, and moldability may be further enhanced, and it may be more advantageous for achieving the desired effects of the present invention.

The antioxidant is an additive for preventing decomposition by ozone or oxygen, preventing oxidation during storage, and preventing deterioration of the physical properties of a product.

Any commonly used antioxidant may be used as the antioxidant as long as the effect of the present invention is not impaired.

Specifically, the antioxidant may comprise at least one selected from the group consisting of hindered phenol-based antioxidants and phosphite-based (phosphorus-based) antioxidants.

The hindered phenol-based antioxidant may comprise, for example, at least one selected from the group consisting of 4,4'-methylene-bis(2,6-di-t-butylphenol), octadecyl-3-(3,5-di-t-butyl-4-hydroxyphenyl)propionate, pentaerythritol tetrakis[3-(3,5-di-t-butyl-4-hydroxyphenyl)propionate), and 3,9-bis[2-[3-(3-tert-butyl-4-hydroxy-5-methylphenyl)propionyloxy]-1,1-dimethylethyl]-2,4,8,10-tetraoxaspiro[5.5]undecane.

The phosphite-based (phosphorus-based) antioxidant may comprise, for example, at least one selected from the group consisting of tris-(2,4-di-t-butylphenyl)phosphite, bis-(2,4-di-t-butylphenyl)pentaerythritol-diphosphite, bis-(2,6-di-t-butyl-4-methylphenyl)pentaerythritol-diphosphite, distearyl-pentaerythritol-diphosphite, [bis(2,4-di-t-butyl-5-methylphenoxy)phosphino]biphenyl, and N,N-bis[2-[[2,4,8,10-tetrakis(1,1-dimethylethyl)dibenzo[d,f][1,3,2]dioxyphosphepin-6-yl]oxy]-ethyl]ethanamine.

The antioxidant may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids content of the mixed composition.

If the content of the antioxidant satisfies the above range, the physical properties of a product may be enhanced, and it may be more advantageous for achieving the desired effects of the present invention.

The crosslinking agent is an additive for modifying the properties of the PHA and increasing the molecular weight of the resin. Common crosslinking agents may be used as long as the effects of the present invention are not impaired.

For example, the crosslinking agent may be at least one selected from the group consisting of fatty acid esters, natural oil containing an epoxy group (epoxylated), diallyl phthalate, pentaerythritol tetraacrylate, trimethylolpropane triacrylate, pentaerythritol triacrylate, dipentaerythritol pentaacrylate, diethylene glycol dimethacrylate, and bis(2-methacryloxyethyl)phosphate.

The crosslinking agent may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids content of the mixed composition.

If the content of the crosslinking agent satisfies the above range, the physical properties of a product may be enhanced, and it may be more advantageous for achieving the desired effects of the present invention.

The nucleating agent is an additive for supplementing or changing the crystallization morphology of a polymer and for enhancing the crystallization (solidification) rate when a melt of the polymer is cooled. In particular, since the PHA resin used in the present invention has a low crystallization rate, the process may not be readily carried out since stickiness is maintained for a long period of time. If the nucleating agent is used to solve this problem, the crystallization rate can be increased to further enhance the processability, moldability, and productivity, and it is possible to effectively achieve the desired physical properties.

Common nucleating agents may be used as long as the effects of the present invention are not impaired.

Specifically, the nucleating agent may be an elemental substance (pure substance), a metal compound comprising a complex oxide, such as carbon black, calcium carbonate, synthetic silicic acid and salts, silica, zinc white, clay, kaolin, basic magnesium carbonate, mica, talc, quartz powder, diatomite, dolomite powder, titanium oxide, zinc oxide, antimony oxide, barium sulfate, calcium sulfate, alumina, calcium silicate, metal salts of organic phosphorus, and boron nitride; a low molecular weight organic compound having a metal carboxylate group, such as a metal salt of octylic acid, toluic acid, heptanoic acid, pelargonic acid, lauric acid, myristic acid, palmitic acid, stearic acid, behenic acid, cerotic acid, montanic acid, melissic acid, benzene acid, p-tert-butylbenzene acid, terephthalic acid, terephthalic acid monomethyl ester, isophthalic acid, and isophthalic acid monomethyl ester; a polymeric organic compound having a metal carboxylate group, such as a salt of a carboxyl group-containing polyethylene obtained by oxidation of polyethylene, a carboxyl group-containing polypropylene obtained by oxidation of polypropylene, a copolymer of an acrylic acid or methacrylic acid and an olefin (e.g., ethylene, propylene, and butene-1), a copolymer of an acrylic or methacrylic acid and styrene, a copolymer of an olefin and maleic anhydride, and a copolymer of styrene and maleic anhydride; a polymeric organic compound, such as an alpha-olefin having 5 or more carbon atoms branched to a carbon atom in position 3 (e.g., 3,3-dimethylbutene-1,3-methylbutene-1,3-methylpentene-1,3-methylhexene-1 and 3,5,5-trimethylhexene-1), a polymer of vinylcycloalkanes (e.g., vinylcyclopentane, vinylcyclohexane, and vinylnorbornane), polyalkylene glycols (e.g., polyethylene glycol and polypropylene glycol), poly(glycolic acid), cellulose, a cellulose ester, and a cellulose ether; phosphoric acid or phosphorous acid and a metal salt thereof, such as diphenyl phosphate, diphenyl phosphite, a metal salt of bis(4-tert-butylphenyl)phosphate, and methylene bis-(2,4-tert-butylphenyl) phosphate; a sorbitol derivative, such as bis(p-methylbenzylidene) sorbitol and bis(p-ethylbenzylidene) sorbitol; and thioglycolic anhydride, p-toluenesulfonic acid, and a metal salt thereof. The nucleating agents may be used alone or in combination thereof.

The nucleating agent may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids content of the mixed composition.

If the content of the nucleating agent satisfies the above range, the crystallization rate can be increased to enhance the moldability, and it is possible to further enhance the productivity and processability.

The filler is an additive to increase moldability by increasing the crystallization rate during a molding procedure. Any commonly used filler may be used as the filler as long as the effect of the present invention is not impaired. It may comprise at least one selected from the group consisting of calcium carbonate, such as light or heavy calcium carbonate, silica, talc, kaolin, barium sulfate, clay, calcium oxide, magnesium hydroxide, titanium oxide, carbon black, and glass fibers.

The filler, especially an inorganic filler, may have an average particle size of 0.5 µm to 5 µm. If the average particle size of the inorganic filler is less than 0.5 µm, it is difficult for the particles to be dispersed. If it exceeds 5 µm, the size of the particles becomes excessively large, which may impair the effects of the present invention. The filler may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids content of the mixed composition.

If the content of the filler satisfies the above range, it may be more advantageous for achieving the desired effects of the present invention.

The stabilizer is an additive for protecting against oxidation and heat and preventing color change. Any commonly used stabilizer may be used as the stabilizer as long as the effect of the present invention is not impaired.

Specifically, the stabilizer may be one selected from the group consisting of trimethyl phosphate, triphenyl phosphate, trimethyl phosphine, phosphoric acid, and phosphorous acid.

The stabilizer may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids content of the mixed composition.

If the content of the stabilizer satisfies the above range, it may be more advantageous for achieving the desired effects of the present invention.

In addition, the compatibilizer is an additive for imparting compatibility by removing heterogeneity between resins.

Any commonly used compatibilizer may be used as the compatibilizer as long as the effect of the present invention is not impaired.

Specifically, the compatibilizer may comprise at least one selected from the group consisting of polyvinyl acetates (PVAc), isocyanates, polypropylene carbonates, glycidyl methacrylates, ethylene vinyl alcohols, polyvinyl alcohols (PVA), ethylene vinyl acetates, and maleic anhydrides.

The compatibilizer may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids content of the mixed composition.

If the content of the compatibilizer satisfies the above range, the physical properties may be enhanced by increasing the compatibility between the resins used, and it may be more advantageous for achieving the desired effects of the present invention.

The mixed composition may have a solids content of 1% by weight or more, 3% by weight or more, 5% by weight or more, 10% by weight or more, 20% by weight or more, or 30% by weight or more, and 80% by weight or less, 75% by weight or less, 70% by weight or less, 60% by weight or less, 50% by weight or less, or 40% by weight or less. As an example, the mixed composition may be prepared as an aqueous dispersion suspension with a solids content of 5 to 80% by weight.

Thereafter, the solids in the aqueous dispersion suspension are obtained using a mold made of porous material and then pressed and dried at high temperatures to obtain a molded article.

Specifically, the mold may consist of an upper mold and a lower mold. A mold made of a porous material with fine pores can be used as the lower mold among them. When a mold made of such a porous material is used, it is possible to easily obtain a preliminarily molded article composed of the solids of the mixed composition on the upper side of the mold simply by immersing the mold in the mixed composition and then taking it out.

Since the preliminarily molded article retains moisture, it may be prepared into a finally molded article upon drying.

According to an example, the drying may be carried out by a hot pressing process. Specifically, the preliminarily molded article may be prepared into a finally molded article by pressing it with a high-temperature upper mold and drying it. The temperature during the press drying may be, for example, 105°C or higher, 110°C or higher, 120°C or higher, or 130°C or higher, and may be 220°C or lower, 200°C or lower, 180°C or lower, 170°C or lower, or 160°C or lower. As an example, the process for preparing a molded article according to an embodiment may comprise obtaining the solids in the aqueous dispersion suspension using a mold made of a porous material and then pressing and drying it at a temperature of 105°C to 180°C.

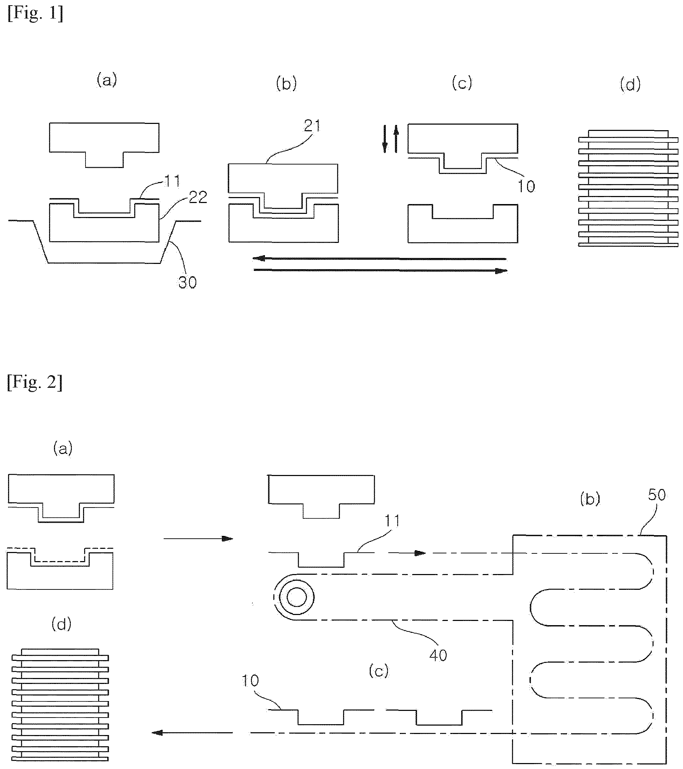

The preparation process by hot pressing is explained with reference to Fig. 1. (a) A mixed composition (suspension) comprising pulp and a biodegradable resin is charged to a slurry tank (30), and a lower mold (22) made of a porous material is immersed in the slurry tank (30) and then taken out to form a preliminarily molded article (11) of a solid composition on the upper side of the lower mold, (b) the preliminarily molded article is pressed and dried with a high-temperature upper mold (21), (c) the pressing and drying step is repeated as necessary to obtain a finally molded article (10), and the molded article is released from the mold, moved on a conveyor, and packaged.

This preparation process has advantages in that the preliminarily molded article can be completely dried inside the mold, a lot of space can be saved by not going through a drying furnace, and the molded article can have a smooth appearance.

According to another example, the drying may be carried out by hot air. Specifically, the drying may be carried out by hot air at 100°C to 200°C for 10 seconds to 10 minutes. For example, the drying may be carried out by hot air at a temperature of 100°C to 200°C, 120°C to 180°C, 135°C to 170°C, 140°C to 165°C, or 145°C to 155°C, for 10 seconds to 10 minutes, 30 seconds to 8 minutes, 20 seconds to 6 minutes, 1 minute to 10 minutes, 2 minutes to 6 minutes, or 5 minutes to 10 minutes.

The preparation process by hot air is explained with reference to Fig. 2. (a) A preliminarily molded article of a solid composition is formed in a mold in the same manner as (a) of Fig. 1, (b) the preliminarily molded article (11) is released from the mold and dried with hot air while it passes through the inside of a drying furnace (50) on a conveyor (40), (c) an additional press molding process is carried out as necessary to obtain a finally molded article (10), and (d) the finally molded article is packaged.

In addition, the molded article may be prepared such that a biodegradable resin layer is coated on the surface of a molded pulp article. The process for preparing such a molded article comprises preparing a first composition comprising pulp and a second composition comprising a biodegradable resin; preparing a preliminarily molded article from the first composition using a mold; coating the second composition on the surface of the preliminarily molded article, wherein the biodegradable resin comprises a polyhydroxyalkanoate (PHA).

### Composition for molding

In addition, the present invention provides a composition for preparing the molded article.

According to an embodiment, the composition comprises pulp and a biodegradable resin, wherein the biodegradable resin comprises a polyhydroxyalkanoate (PHA) resin, and when moisture is removed from the composition, which is then dried by pressing at a temperature of 170°C for 2 minutes with a hot press, the brine absorption rate is 100 g/m² or less for 30 minutes in a Cobb test according to the TAPPI T441 standard. Specifically, the brine absorption rate may be 90 g/m² or less, 80 g/m² or less, 70 g/m² or less, 60 g/m² or less, 50 g/m² or less, 40 g/m² or less, 30 g/m² or less, 20 g/m² or less, 15 g/m² or less, or 10 g/m² or less. Here, the brine may have a concentration of 3.5% by weight.

In addition, when moisture is removed from the composition, which is then dried by pressing at a temperature of 170°C for 2 minutes with a hot press, the water absorption rate may be 100 g/m² or less for 30 minutes in a Cobb test according to the TAPPI T441 standard. Specifically, the water absorption rate may be 90 g/m² or less, 80 g/m² or less, 70 g/m² or less, 60 g/m² or less, 50 g/m² or less, 40 g/m² or less, 30 g/m² or less, 20 g/m² or less, 15 g/m² or less, or 10 g/m² or less.

In addition, when moisture is removed from the composition, which is then dried by pressing at a temperature of 170°C for 2 minutes with a hot press, the average kit rating may be 3 to 12 when tested for oil resistance according to the TAPPI UM557 standard. Specifically, the average kit rating may be 3 or more, 4 or more, 5 or more, 6 or more, 7 or more, or 8 or more, and may be 12 or less, 11 or less, 10 or less, or 9 or less.

In addition, when moisture is removed from the composition, which is then dried by pressing at a temperature of 170°C for 2 minutes with a hot press, the tear index may be 5 mN·m²/g or more as measured according to the KS M ISO 1974 standard. Specifically, the tear index may be 10 mN·m²/g or more, 15 mN·m²/g or more, 20 mN·m²/g or more, 25 mN·m²/g or more, 30 mN·m²/g or more, 35 mN·m²/g or more, or 40 mN·m²/g or more, and 200 mN·m²/g or less, 150 mN·m²/g or less, 120 mN·m²/g or less, 100 mN·m²/g or less, or 80 mN·m²/g or less.

In addition, when moisture is removed from the composition, which is then dried by pressing at a temperature of 170°C for 2 minutes with a hot press, the number of repeated folding may be 10 or more as measured using a folding endurance tester (MIT type). Specifically, the number of repeated folding may be 30 or more, 50 or more, 100 or more, 200 or more, or 300 or more. In addition, the upper limit of the number of repeated folding is not particularly limited, but it may be, for example, 200,000 or less, 100,000 or less, 50,000 or less, 10,000 or less, 5,000 or less, or 1,000 or less.

The composition may comprise the biodegradable resin in an amount of 1 part by weight to 80 parts by weight relative to 100 parts by weight of the pulp on the basis of solids content. Specifically, the molded article may comprise the biodegradable resin in an amount of 1 part by weight or more, 5 parts by weight or more, 10 parts by weight or more, 15 parts by weight or more, 20 parts by weight or more, 30 parts by weight or more, or 40 parts by weight or more, and 80 parts by weight or less, 75 parts by weight or less, 70 parts by weight or less, 65 parts by weight or less, 60 parts by weight or less, or 50 parts by weight or less, relative to 100 parts by weight of the pulp on the basis of solids content.

The type and composition of the biodegradable resin are as exemplified in the description of the molded article above.

For example, it may comprise 80% by weight or more, 85% by weight or more, 90% by weight or more, or 95% by weight or more of a PHA resin as a biodegradable resin.

The PHA resin may be a PHA copolymer resin. Specifically, it may be a copolymer comprising two or more different repeat units in which the different repeat units are randomly distributed in the polymer chain.

Examples of repeat units that may be contained in the PHA resin include 2-hydroxybutyrate, lactic acid, glycolic acid, 3-hydroxybutyrate (3-HB), 3-hydroxypropionate (3-HP), 3-hydroxyvalerate (3-HV), 3-hydroxyhexanoate (3-HH), 3-hydroxyheptanoate (3-HHep), 3-hydroxyoctanoate (3-HO), 3-hydroxynonanoate (3-HN), 3-hydroxydecanoate (3-HD), 3-hydroxydodecanoate (3-HDd), 4-hydroxybutyrate (4-HB), 4-hydroxyvalerate (4-HV), 5-hydroxyvalerate (5-HV), and 6-hydroxyhexanoate (6-HH). The PHA resin may comprise one or more repeat units selected from the above.

Specifically, the PHA resin may comprise one or more repeat units selected from the group consisting of 3-HB, 4-HB, 3-HP, 3-HH, 3-HV, 4-HV, 5-HV, and 6-HH.

More specifically, the PHA resin may comprise a 4-HB repeat unit. That is, the PHA resin may be a PHA copolymer comprising a 4-HB repeat unit.

In addition, the PHA resin may be a PHA copolymer that comprises a 4-HB repeat unit and further comprises one repeat unit different from the 4-HB repeat unit, or further comprises two, three, four, five, six, or more repeat units different from each other.

According to an embodiment of the present invention, the PHA resin may comprise a PHA copolymer resin that further comprises one or more repeat units selected from the group consisting of 3-HB, 3-HP, 3-HH, 3-HV, 4-HV, 5-HV, and 6-HH, while comprising a 4-hydroxybutyrate (4-HB) repeat unit.

More specifically, the PHA resin may be a PHA copolymer resin comprising a 3-HB repeat unit and a 4-HB repeat unit. For example, the PHA resin may be poly-3-hydroxybutyrate-co-4-hydroxybutyrate (3HB-co-4HB).

According to an embodiment of the present invention, it is important to adjust the content of the 4-HB repeat unit in the PHA copolymer. It is as exemplified in the description of the molded article above.

The PHA copolymer resin may comprise a 4-HB repeat unit in an amount of 0.1% by weight or more, 1% by weight or more, 5% by weight or more, 10% by weight or more, 15% by weight or more, 20% by weight or more, 25% by weight or more, 30% by weight or more, 35% by weight or more, 40% by weight or more, or 45% by weight or more, and 60% by weight or less, 55% by weight or less, 50% by weight or less, 45% by weight or less, or 40% by weight or less, based on the total weight of the PHA copolymer resin, but it is not limited thereto. As a specific example, the PHA resin may be a PHA copolymer resin comprising a 4-HB repeat unit in an amount of 0.1% by weight to 60% by weight.

The PHA resin may comprise a combination of two or more PHA resins having different crystallinities. That is, the PHA resin may be adjusted to have the content of a 4-HB repeat unit in the specific range by mixing two or more types of PHA resins having different crystallinities.

For example, the PHA resin comprises a mixed resin of a first PHA resin and a second PHA resin having different contents of a 4-HB repeat unit, and the PHA resin may be adjusted such that the content of a 4-HB repeat unit is 0.1% by weight to 60% by weight based on the total weight of the PHA resin. Specific features of the first PHA resin and the second PHA resin are as exemplified in the description of the molded article above.

Further, the composition may be prepared as a suspension in which pulp and a biodegradable resin are dispersed in a solvent. In addition, the composition may further comprise at least one additive. The types and contents of the solvent and additive mixed in the composition are as exemplified in the description of the preparation process of the molded article above.

### Mode for the Invention

Hereinafter, the present invention will be described in more detail with reference to the following examples. But the following Examples are intended to illustrate the present invention, and the scope of the Examples is not limited thereto only.

### Examples 1 to 5: Preparation of molded articles of pulp mixed with PHA

### Step (1) Preparation of a PHA suspension

A dried polyhydroxyalkanoate (PHA) resin (scPHA; content of a 4-HB repeat unit: 1 to 15% by weight; CJ Cheiljedang Corp.) was powdered using a bar bowl, and distilled water was added to prepare an aqueous dispersion composition with a solids content of about 10% by weight. Thereafter, in order to pulverize the PHA powder in the aqueous dispersion composition, it was treated with a homogenizer (Ultra-turrax, Daehan Science) at 12,000 rpm for 1 minute to obtain a suspension.

### Step (2) Preparation of a mixed composition

The suspension obtained above was homogeneously mixed with a slurry comprising 4% by weight of hardwood pulp solids. In such an event, each mixed composition was obtained by mixing the PHA fine powder in an amount of 10 parts by weight (Example 1), 20 parts by weight (Example 2), 30 parts by weight (Example 3), 40 parts by weight (Example 4), or 50 parts by weight (Example 5), relative to 100 parts by weight of the pulp solids.

### Step (3) Preparation of a molded article

A circular nonwoven fabric (pore size: 8 µm) was placed on a glass Buchner funnel, and each mixed composition obtained above was filtered under reduced pressure to form a circular filtration cake on the circular nonwoven fabric, which was then pressed using moisture absorbent paper to remove moisture.

The cake from which moisture had been removed was pressed and dried using a hot press at a temperature of 170°C for 2 minutes to prepare a molded article of pulp mixed with PHA.

### Comparative Example 1: Preparation of a molded pulp article

A circular nonwoven fabric (pore size: 8 µm) was placed on a glass Buchner funnel, and a slurry comprising 4% by weight of hardwood pulp solids was filtered under reduced pressure to form a circular filtration cake on the circular nonwoven fabric, which was then pressed using moisture-absorbent paper to remove moisture. The cake from which moisture had been removed was pressed and dried using a hot press at a temperature of 170°C for 2 minutes to prepare a molded pulp article.

### Test Example

The molded articles of Examples 1 to 5 were each tested as follows.

### (1) Water resistance

The molded articles of Examples 1 to 5 were each evaluated for water resistance. Water resistance was measured by one of the common methods in the paper industry, the so-called Cobb test method (TAPPI T441 standard). As a result, the water absorption rate of all the molded articles of Examples 1 to 5 was in the range of 5 g/m² to 60 g/m² for 30 minutes, whereas the water absorption rate of the molded article of Comparative Example 1 exceeded 100 g/m² for 30 minutes.

### (2) Oil resistance

The molded articles of Examples 1 to 5 were each evaluated for oil resistance. Oil resistance was measured by one of the common methods in the paper industry, the TAPPI UM557 standard. As a result, the average kit rating of all the molded articles of Examples 1 to 5 was in the range of 3 to 12 according to the TAPPI UM557 standard, whereas the average kit grade of the molded article of Comparative Example 1 was 1.

### (3) Salt resistance

The molded articles of Examples 1 to 5 were each evaluated for salt resistance. Salt resistance was measured by one of the common methods in the paper industry, the so-called Cobb test method (TAPPI T441 standard), while brine (concentration 3.5% by weight) was used instead of distilled water. As a result, the brine absorption rate of all the molded articles of Examples 1 to 5 was in the range of 5 g/m² to 70 g/m² for 30 minutes, whereas the brine absorption rate of the molded article of Comparative Example 1 exceeded 100 g/m² for 30 minutes.

### (4) Tear index

The molded articles of Examples 1 to 5 were each evaluated for tear index. Tear index was measured according to the KS M ISO 1974 standard. As a result, the tear index of all the molded articles of Examples 1 to 5 was in the range of 5 mN·m²/g to 50 mN·m²/g, whereas the tear index of the molded article of Comparative Example 1 was less than 5 mN·m²/g.

### (5) Folding endurance

The molded articles of Examples 1 to 5 were each evaluated for folding endurance. Folding endurance was measured using a folding endurance tester (MIT type). As a result, the number of repeated folding of all the molded articles of Examples 1 to 5 was in the range of 30 to 500, whereas the number of repeated folding of the molded article of Comparative Example 1 was less than 30.

## Claims

1. A molded article, which comprises pulp and a biodegradable resin, wherein the biodegradable resin comprises a polyhydroxyalkanoate (PHA) resin, and the molded article has a brine absorption rate of 100 g/m² or less for 30 minutes in a Cobb test according to the TAPPI T441 standard.

2. The molded article of claim 1, wherein the molded article comprises the biodegradable resin in an amount of 1 part by weight to 80 parts by weight relative to 100 parts by weight of the pulp.

3. The molded article of claim 1, wherein the polyhydroxyalkanoate (PHA) resin comprises a 4-hydroxybutyrate (4-HB) repeat unit.

4. The molded article of claim 3, wherein the polyhydroxyalkanoate (PHA) resin is a polyhydroxyalkanoate (PHA) copolymer resin comprising the 4-hydroxybutyrate (4-HB) repeat unit in an amount of 0.1% by weight to 60% by weight.

5. The molded article of claim 3, wherein the polyhydroxyalkanoate (PHA) resin is a polyhydroxyalkanoate (PHA) copolymer resin that further comprises at least one repeat unit selected from the group consisting of 3-hydroxybutyrate (3-HB), 3-hydroxypropionate (3-HP), 3-hydroxyvalerate (3-HV), 3-hydroxyhexanoate (3-HH), 4-hydroxyvalerate (4-HV), 5-hydroxyvalerate (5-HV), and 6-hydroxyhexanoate (6-HH).

6. The molded article of claim 1, wherein the biodegradable resin further comprises at least one selected from the group consisting of a polylactic acid (PLA) resin, a polybutylene succinate (PBS) resin, and a polybutylene adipate-co-terephthalate (PBAT) resin.

7. The molded article of claim 1, which has a water absorption rate of 100 g/m² or less for 30 minutes in a Cobb test according to the TAPPI T441 standard.

8. The molded article of claim 1, which has a tear index of 5 mN·m²/g or more as measured according to the KS M ISO 1974 standard.

9. A process for preparing the molded article of claim 1, which comprises:
preparing a mixed composition comprising pulp and a biodegradable resin; and
preparing a molded article from the mixed composition using a mold,
wherein the biodegradable resin comprises a polyhydroxyalkanoate (PHA) resin.

10. The process for preparing the molded article according to claim 9, wherein the mixed composition is prepared as an aqueous dispersion suspension with a solids content of 5 to 80% by weight, and the solids in the aqueous dispersion suspension are obtained using a mold made of a porous material and then pressed and dried at a temperature of 105°C to 180°C.

11. A composition, which comprises pulp and a biodegradable resin, wherein the biodegradable resin comprises a polyhydroxyalkanoate (PHA) resin, and when moisture is removed from the composition, which is then dried by pressing at a temperature of 170°C for 2 minutes with a hot press, the brine absorption rate is 100 g/m² or less for 30 minutes in a Cobb test according to the TAPPI T441 standard.

12. The composition of claim 11, wherein the composition comprises the biodegradable resin in an amount of 1 part by weight to 80 parts by weight relative to 100 parts by weight of the pulp, and the polyhydroxyalkanoate (PHA) resin comprises a 4-hydroxybutyrate (4-HB) repeat unit.

13. The composition of claim 11, wherein the polyhydroxyalkanoate (PHA) resin is a polyhydroxyalkanoate (PHA) copolymer resin comprising a 4-hydroxybutyrate (4-HB) repeat unit in an amount of 0.1% by weight to 60% by weight.

14. The composition of claim 11, wherein the biodegradable resin further comprises at least one selected from the group consisting of a polylactic acid (PLA) resin, a polybutylene succinate (PBS) resin, and a polybutylene adipate-co-terephthalate (PBAT) resin.

15. The composition of claim 11, wherein, when moisture is removed from the composition, which is then dried by pressing at a temperature of 170°C for 2 minutes with a hot press, the water absorption rate is 100 g/m² or less for 30 minutes in a Cobb test according to the TAPPI T441 standard.

16. The composition of claim 11, wherein, when moisture is removed from the composition, which is then dried by pressing at a temperature of 170°C for 2 minutes with a hot press, the tear index is 5 mN·m²/g or more as measured according to the KS M ISO 1974 standard.
